# FASCICULE DE BREVET EUROPEEN

(11) **EP 2 397 356 B1**
(45) Date de publication et mention de la délivrance du brevet: **10.04.2013**
(21) Numéro de dépôt: 11305690.7
(22) Date de dépôt: 06.06.2011
(51) Int. Cl.: B60K 15/01, F02M 35/10, F02M 37/00, F02M 55/02, F02M 69/46, F02M 25/08

(54) **Dispositif de protection pour un tuyau d'alimentation de carburant d'un moteur à combustion**
Schutzvorrichtung für einen Kraftstoffzuführschlauch eines Verbrennungsmotors
Protective device for a fuel supply line of a combustion engine

(30) Priorité: 21.06.2010 FR 1054902
(43) Date de publication de la demande: 21.12.2011
(73) Titulaire: Renault S.A.S., 92100 Boulogne-Billancourt (FR)
(72) Inventeur: Gounet, Mathieu, 92290 CHATENAY MALABRY (FR); Connan, Edouard, 92000 NANTERRE (FR)

(56) Documents cités:
- EP-A2- 1 447 553
- WO-A1-2009/139081
- US-A1- 2007 012 501

## Description

La présente invention concerne la protection des tuyaux d'alimentation de carburant dans un moteur à combustion interne contre les chocs, notamment en cas de déformation frontale du bloc moteur dans l'axe du véhicule.

Plus particulièrement, l'invention concerne les moteurs à injection directe, appelée en terme anglo-saxon « High Pressure Direct Injection ». Cette technologie d'injection pour moteur permet d'obtenir une haute pression, par exemple d'environ 200 bars augmentant ainsi le rendement moteur tout en diminuant la pollution générée. A cet effet, les injecteurs sont alimentés sous pression par une pompe haute pression et fournissent un jet dans chaque cylindre. En cas d'accident frontal du véhicule, des éléments du moteur transversal peuvent venir écraser, arracher ou cisailler le tuyau d'alimentation de carburant. L'endommagement du tuyau d'alimentation peut générer des fuites de carburant à haute pression, engendrant un risque élevé d'incendie. Le risque d'endommagement est d'autant plus fort en cas d'accident engendrant la destruction de la face avant du véhicule et par conséquent du compartiment moteur.

Afin d'assurer une sécurité suffisante aux véhicules en cas d'accident frontal du véhicule pouvant engendrer l'écrasement du tuyau d'alimentation de carburant, il est important de protéger les tuyaux d'alimentation en carburant de manière à réduire le risque d'incendie.

Une solution consiste à disposer d'un parcours du tuyau d'alimentation en carburant approprié, permettant d'éviter les zones à fort risque d'écrasement, d'arrachement ou de cisaillement lors d'un choc frontal du véhicule. Une telle solution présente des difficultés dues à l'architecture complexe des moteurs. De plus, un tel parcours allonge le tuyau d'alimentation engendrant des contraintes d'assemblage et des contraintes vibratoires non admissibles.

Une autre solution consiste à protéger la rampe d'alimentation de carburant. L'état de la technique décrit ainsi une protection d'une rampe d'alimentation par un ensemble déformable par écrasement fixé sur la culasse du moteur.

Des autres dispositifs de protection sont connus du document US 2007/0012501 A1 et du document WO 2009/139081.

Toutefois, une telle protection ne permet pas de protéger la partie du tuyau d'alimentation située entre la rampe d'alimentation et la pompe haute pression.

Par ailleurs, il est nécessaire d'avoir un dispositif de levage du bloc moteur afin de soulever le moteur. En effet, les moteurs à combustion pour véhicules automobiles doivent pouvoir être manipulés et notamment être soulevés aisément pas des portiques de levage. Pour ce faire, il est connu de fixer sur le moteur au moins un anneau de levage venant coopérer avec un crochet de levage afin de soulever le haut moteur. L'anneau de levage peut être amovible ou fixe et comporte généralement une anse de préhension et des moyens d'accroche de ladite anse de préhension au bloc moteur

La présente invention a pour objet de protéger la partie du tuyau d'alimentation de carburant située entre la pompe haute pression et la rampe d'injection, afin d'éviter tout risque d'écrasement, de cisaillement ou d'arrachement du tuyau d'alimentation de carburant et ainsi tout risque d'incendie.

L'invention a également pour objet de proposer un dispositif de protection d'un tuyau d'alimentation de carburant intégré à un anneau de levage du moteur.

Dans un mode de réalisation, l'invention concerne un dispositif de protection contre les chocs pour un tuyau d'alimentation en carburant d'un moteur à combustion interne comprenant un bloc moteur, une culasse coiffant le bloc moteur, un organe annexe monté à côté de la culasse de manière à laisser subsister un écartement entre la culasse et l'organe annexe et un tuyau d'alimentation de carburant passant dans ledit écartement.

Le dispositif de protection comprend un étrier présentant des moyens de fixation sur la culasse, une portion formant goulotte de protection disposée entre la culasse et l'organe annexe, capable de recevoir le tuyau d'alimentation de carburant et de le protéger en cas de choc tendant à diminuer l'écartement entre la culasse et l'organe annexe.

Ainsi, lors d'un choc frontal tendant à rapprocher l'organe annexe de la culasse du moteur, le tuyau d'alimentation est protégé de l'endommagement par l'organe annexe grâce à une goulotte de protection.

Le dispositif de protection comprend des moyens de préhension. Ainsi, l'invention propose un dispositif de protection pour un tuyau d'alimentation intégrant une fonction d'anneau de levage, tout en limitant le coût et l'encombrement du moteur.

Les moyens de préhension comprennent une portion de préhension s'étendant vers le haut de la culasse présentant un perçage, de manière à coopérer avec un crochet de levage du moteur. Le dispositif de protection peut être réalisé en tôle métallique pliée ou emboutie.

Avantageusement, la goulotte de protection comprend des moyens de renfort en saillie vers l'organe annexe.

Selon un autre mode de réalisation, l'invention concerne un dispositif de protection comprenant une portion formant languette coudée en saillie vers l'organe annexe. Par exemple, les moyens de fixation comprennent des portions axiales de fixation situées respectivement dans des plans parallèles. La goulotte de protection et la languette coudée peuvent être réalisées en tôle métallique pliée.

Avantageusement, le dispositif de protection comprend des ailettes de fixation d'éléments mécaniques.

Par exemple, les moyens de fixation à la culasse comprennent des perçages destinés à coopérer avec des vis de fixation transversales.

Selon un autre aspect, l'invention concerne un moteur à combustion interne comprenant un bloc moteur, une culasse coiffant le bloc moteur, un organe annexe fixé sur une extrémité latérale d'un collecteur d'admission et monté à côté de la culasse de manière à laisser subsister un écartement entre la culasse et l'organe annexe et un tuyau d'alimentation de carburant passant dans ledit écartement.

Le moteur à combustion interne comprend un dispositif de protection pour le tuyau d'alimentation de carburant tel que décrit ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre une vue de dessus d'un moteur comprenant un dispositif de protection selon l'invention,
- la figure 2 est une vue en perspective du moteur selon la figure 1,
- la figure 3 est une vue en perspective du dispositif de protection de la figure 1 selon un autre mode de réalisation,
- la figure 4 est une vue en perspective du moteur selon la figure 1 comprenant un dispositif de protection selon un autre mode de réalisation,
- la figure 5 est une vue en perspective du dispositif de protection selon la figure 4, et
- la figure 6 est une vue de dessus du dispositif de protection selon la figure 5.

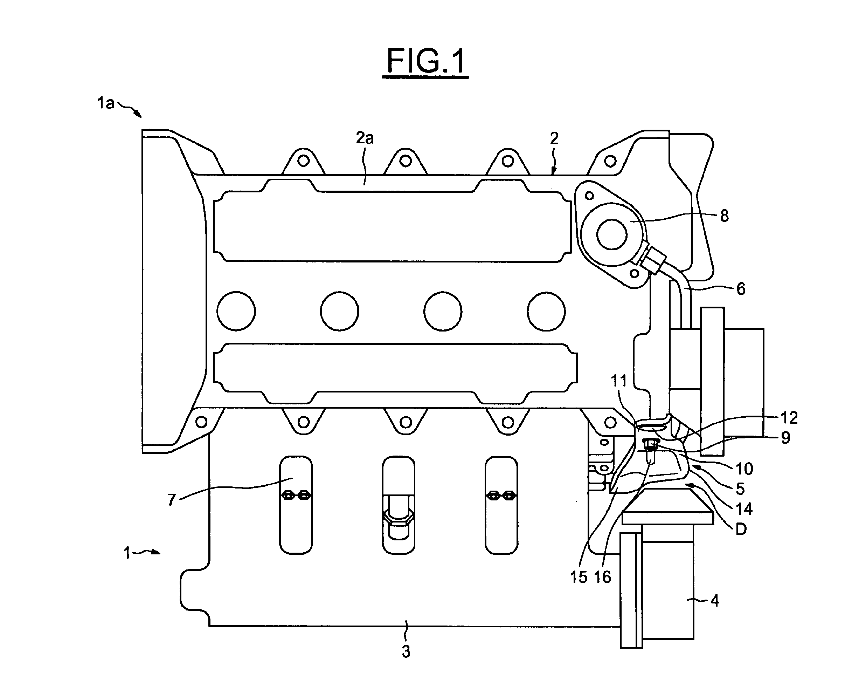

La figure 1 illustre partiellement en vue de dessus, un moteur 1 et notamment la partie supérieure du moteur appelée « haut-moteur » 1a. Ce moteur 1 est destiné à être monté sur le châssis d'un véhicule automobile (non représenté). Par « châssis », on entend tout assemblage de forme générale sensiblement parallélépipédique supportant le moteur 1, l'habitacle et la carrosserie d'un véhicule. Un moteur est généralement constitué d'un bloc-cylindres (non représenté) situé en partie inférieure du moteur relié par un joint de culasse à un haut-moteur. Le haut-moteur 1a est constitué notamment par la culasse 2 recouverte d'un couvre-culasse 2a, d'un collecteur d'admission 3 et un organe annexe 4, tel que par exemple un boîtier papillon. Le boîtier papillon 4 est généralement constitué d'un corps et d'un papillon des gaz où circulent les gaz frais. Le boîtier papillon 4 permet la régulation de l'air admis dans le moteur 1 ainsi que la régulation du ralenti lors d'une faible rotation du moteur 1. Le collecteur d'admission 3 répartit les gaz admis dans le moteur 1 sur l'ensemble des cylindres (non représentés).

De manière classique, la culasse 2 loge les différents organes de distribution du haut-moteur 1a, tels que les soupapes d'admission d'air frais et d'échappement des gaz brûlés et les arbres à cames permettant la mise en mouvement de ces soupapes (non représentés). La culasse 2 se présente sous la forme d'un socle globalement parallélépipédique.

Le boîtier papillon 4 est monté à côté de la culasse de manière à laisser subsister un écartement D entre la culasse 2 et ledit boîtier papillon 4 et est fixé sur le collecteur d'admission 3

Tel qu'illustré sur la figure 1, le haut-moteur 1a comprend un dispositif de protection 5 pour un tuyau 6 d'alimentation de carburant relié entre une rampe d'injection 7 et une pompe haute pression 8.

Le dispositif de protection 5 d'une partie du tuyau 6 d'alimentation est fixé sur la culasse 2 au moyen de deux vis 9. La partie du tuyau 6 à protéger correspond à la portion allant de la rampe d'injection 7 à la pompe haute pression 8 passant dans l'écartement D entre la culasse 2 et le boîtier papillon 4, Cette partie de tuyau 6 d'alimentation est ainsi exposée à un fort risque d'endommagement par le boîtier papillon 4. Dans l'exemple illustré, le collecteur d'admission 3 est réalisé en matière synthétique, tandis que le boîtier papillon 4 est en matière métallique, par exemple en aluminium. Lors d'un choc frontal du véhicule, le boîtier papillon 4 peut se désolidariser du collecteur d'admission 3 et venir endommager le tuyau 6 d'alimentation de carburant.

Le dispositif de protection 5 comprend un étrier 10 en tôle métallique sensiblement allongée. L'étrier 10 présente des moyens de préhension 11 ou « anneau de levage » comportant une portion de préhension s'étendant vers le haut du couvre-culasse 2a. La portion de préhension 11 comprend, sur une extrémité 11a vers le haut du couvre-culasse 2a, un perçage 12 apte à coopérer avec un crochet de levage (non représenté) afin de soulever le haut-moteur 1a.

Tel qu'illustré aux figures 1 à 3, la portion de préhension 11 comprend, sur l'extrémité opposée 11b au perçage 12, un premier moyen de fixation transversal 13 à la culasse formé par un perçage 13a destiné à coopérer avec une vis de fixation transversale 9.

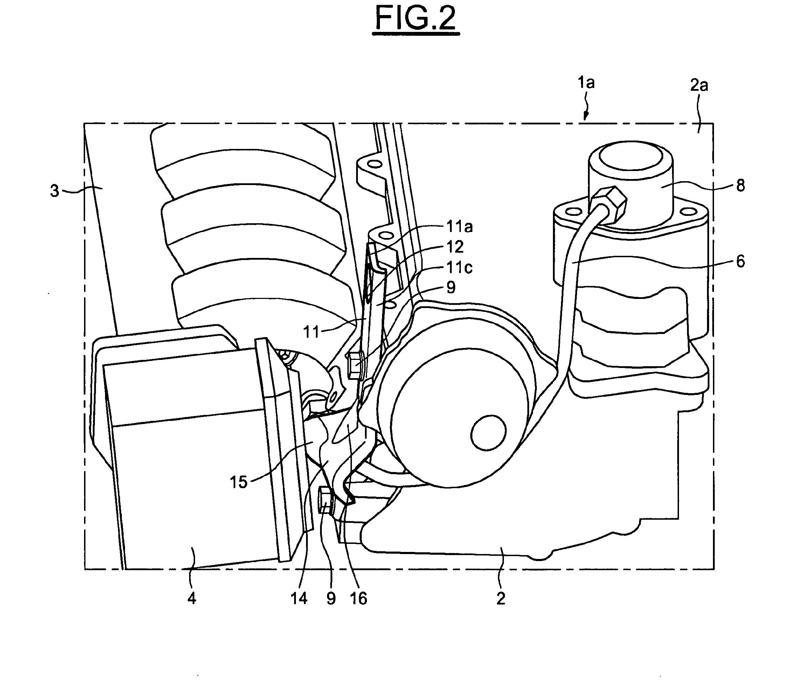

La portion de préhension 11 se prolonge vers le bas de la culasse 2 par une portion formant goulotte de protection 14. La goulotte de protection 14 est disposée entre la culasse 2 et le boîtier papillon 4 et permet de recevoir le tuyau 6 d'alimentation de carburant et de le protéger en cas de choc tendant à diminuer l'écartement D entre la culasse 2 et le boîtier papillon 4. Ainsi, le tuyau 6 d'alimentation de carburant est protégé du boîtier papillon 4. La goulotte de protection 14 peut être réalisée en tôle métallique pliée ou emboutie. Tel qu'illustré à la figure 2, la partie de préhension 11 comprend une portion transversale 11c formant rebord vers la culasse 2.

On notera que le dispositif de protection 5 pourrait être adapté pour protéger d'autres parties du tuyau 6 d'alimentation de carburant.

Afin de rigidifier le dispositif de protection 5, la goulotte de protection 14 comprend deux renforts 15, 16 en saillie vers le boîtier papillon 4. Ces renforts 15, 16 peuvent être réalisés par emboutissage de la goulotte de protection 14 vers le boîtier papillon 4 de manière à amortir les chocs issus du détachement du boîtier papillon 4.

La figure 2 illustre une vue en perspective du haut-moteur 1a de la figure 1.

Comme illustré à la figure 2, la goulotte de protection 14 se prolonge vers le bas de la culasse 2 par un second moyen de fixation transversal 17 à la culasse 2 formé par un perçage 17a destiné à coopérer avec une vis de fixation transversale 9. Il est nécessaire d'avoir au moins deux points de fixation 13, 17 du dispositif de protection 5 à la culasse 2 afin d'éviter la rotation du dispositif de protection 5 lors du levage du moteur 1.

Selon le mode de réalisation des figures 1 et 2, le dispositif de protection 5 est réalisé en tôle emboutie.

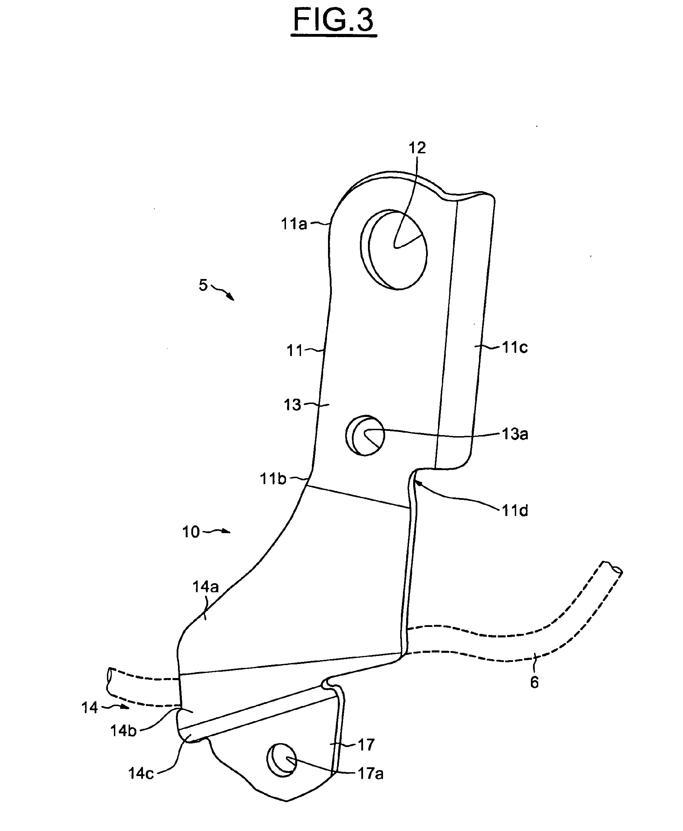

La figure 3 représente le dispositif de protection 5 des figures 1 et 2 réalisé en tôle métallique pliée. On retrouve des éléments communs aux figures 1 et 2, les mêmes éléments étant alors désignés par les mêmes références.

Tel qu'illustré à la figure 3, l'étrier 10 comprend une forme de plaque allongée pliée de manière à protéger le tuyau 6 d'alimentation du boîtier papillon 4. A cet effet, le dispositif de protection 5 comprend une portion de préhension 11 ou « anneau de levage » comportant à une des ses extrémités 11a, sensiblement arrondie, un perçage 12 permettant son crochetage, un premier moyen de fixation 13, une portion formant goulotte de protection 14 et un second moyen de fixation 17. Les premier et deuxième moyens de fixation 13, 17 comportent chacun un perçage 13a, 17a afin de coopérer avec une vis de fixation transversale. Le premier moyen de fixation 13 se situe à l'extrémité 11b opposée à l'extrémité 11a du moyen de préhension 11. La portion de préhension présente un rebord transversal 11c replié vers la culasse 2 et relié à l'extrémité 11b par un congé 11d.

L'extrémité 11b du moyen de préhension est reliée à la goulotte de protection 14 présentant une première portion inclinée 14a vers le boîtier papillon 4 et une seconde portion inclinée 14b vers la culasse 2 du moteur 1. Le second moyen de fixation 17 est formé par une portion de fixation inclinée 14c s'étendant de la seconde portion inclinée 14b vers le bas de la culasse 2. Le second moyen de fixation 17 est sensiblement incliné, de manière à se rabattre contre la culasse 2 et à assurer une fixation plane du dispositif de protection 5 à la culasse 2.

Un tel dispositif de protection 5 est plus simple à réaliser et moins coûteux que le dispositif de protection 5 illustré aux figures 1 et 2. Toutefois, un dispositif de protection 5 selon les figures 1 et 2 est plus résistant aux chocs et permet une protection accrue du tuyau 6 d'alimentation de carburant.

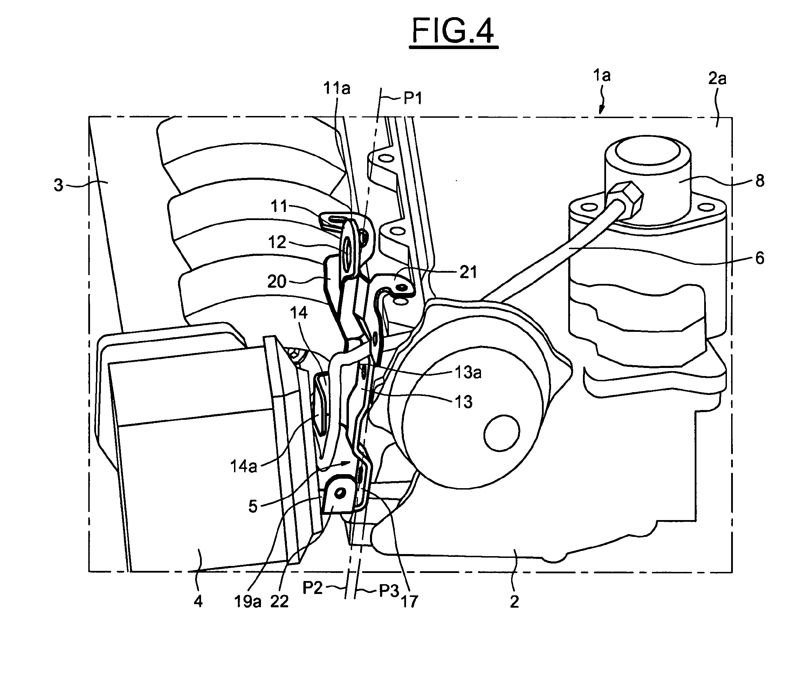

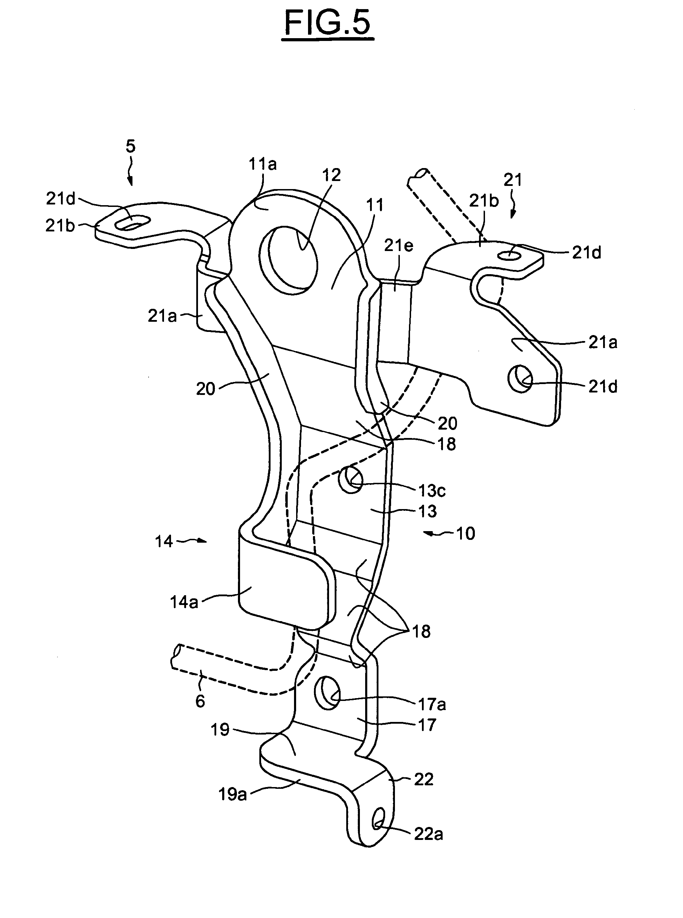

La figure 4 illustre un moteur comprenant un dispositif de protection 5 selon un autre mode de réalisation et la figure 5 illustre un dispositif de protection 5 de la figure 4 selon une inclinaison différente. On retrouve des éléments communs aux figures 1 à 3, les mêmes éléments étant alors désignés par les mêmes références.

Conformément aux figures 4 et 5, la portion de préhension 11 s'étend axialement dans un premier plan P1. La portion de préhension 11 est décalée transversalement par rapport aux portions de fixation 13, 17 qui s'étendent axialement respectivement dans un second plan P2 et un troisième plan P3. Les plans P1, P2 et P3 sont décalés transversalement les uns par rapport aux autres. Les portions de préhension 11 et de fixation 13, 17 sont respectivement reliées par des portions embouties 18 de manière à épouser la forme de la culasse 2 du moteur 1 ainsi qu'à limiter l'encombrement du moteur 1. L'extrémité 11a de la portion de préhension 11 comportant le perçage 12 peut être sensiblement arrondie.

La fixation du dispositif de protection 5 à la culasse se fait par le biais de visseries 9 insérées dans des trous 13a, 17a situés sur chacune des portions de fixation 13, 17. Un des trous 17a peut être oblong de manière à faciliter la fixation du dispositif de protection 5 sur la culasse 2.

Comme illustré aux figures 4 et 5, l'étrier 10 présente une largeur variable, notamment la largeur de la seconde portion de fixation 17 peut être inférieure à la largeur des portions embouties 18 et de la portion de préhension 11. La forme complexe du dispositif de protection 5 permet de limiter l'encombrement du moteur 1 et de fournir un dispositif de protection 5 d'un tuyau 6 d'alimentation de carburant suffisamment résistant aux chocs. Toutefois, on notera que le dispositif de protection 5 pourrait avoir une largeur unique sur toute sa longueur.

L'étrier 10 se prolonge transversalement en direction du boîtier papillon 4 par une goulotte de protection 14 présentant une forme de U et située sensiblement au niveau de la première portion de fixation 13. La goulotte de protection 14 forme un bouclier de protection capable de recevoir le tuyau 6 d'alimentation dans la forme en U et de le protéger en cas de choc frontal tendant à réduire l'écartement D entre le boîtier papillon 4 et la culasse 2.

Le dispositif de protection 5 comprend une seconde portion de protection 19 formant une languette coudée en saillie d'une extrémité de la seconde portion de fixation 17 vers le boîtier papillon 4. Dans l'exemple illustré, la languette coudée 19 forme un angle sensiblement droit avec la seconde portion de fixation 17. Ainsi, on observe deux points de contact 14a, 19a en cas de choc frontal avec le boîtier papillon 4.

La goulotte de protection 14 et la languette coudée 19 de protection sont réalisées en tôle métallique pliée.

La réalisation du dispositif de protection 5 par emboutissage permet d'obtenir un rebord latéral 20 au niveau de la portion de préhension 11 et de la première portion de fixation 13 s'étendant transversalement vers le boîtier papillon 4. Ces rebords latéraux 20 permettent de rigidifier l'étrier 10 et permettent de définir une forme de gouttière. La goulotte de protection 14 est réalisée par un pliage d'un des rebords 20 de manière à former un angle sensiblement droit avec le rebord 20.

Le dispositif de protection 5 peut comprendre des ailettes supplémentaires 21 s'étendant latéralement, transversalement et/ou axialement en fonction de l'espace disponible dans le moteur 1 afin de réceptionner des éléments mécaniques (non représentés), tels que, par exemple, des vannes, des goulottes d'orientation et de fixation de câbles du circuit électrique et des moyens de fixation divers. A cet effet, les ailettes supplémentaires 21 peuvent comprendre des perçages 21d apte à coopérer avec des moyens de fixation des éléments mécaniques (non représentés). Les goulottes d'orientation de câbles permettent de diriger le câblage dans les directions souhaitées et d'éviter le contact entre des câbles électriques et le tuyau 6 d'alimentation en carburant. Dans l'exemple illustré, ces ailettes de fixation 21 sont fixées sur la portion de préhension 11 de manière à s'entendre latéralement de part et d'autre de l'étrier 10. Ainsi, les éléments mécaniques sont aisément fixés par le dessus du moteur 1. On notera que l'on pourrait envisager la fixation d'ailettes de fixation 21 sur d'autres parties du dispositif de protection. Dans l'exemple illustré, l'ailette de fixation 21 comprend une portion radiale 21a située contre la portion de préhension 11 et s'étendant de chaque coté de l'étrier 10 par une portion transversale 21b. Les deux portions radiales 21a peuvent être directement liées ou indirectement par des portions inclinées 21e afin d'épouser la forme de la culasse et de limiter l'encombrement du véhicule.

La languette coudée 19 peut également présenter une ailette axiale 22 de fixation d'éléments mécaniques. A cet effet, on pourrait prévoir un perçage 22a destiné à fixer une goulotte d'orientation des câbles. La goulotte d'orientation des câbles pourrait alors être fixée en deux points, sur l'ailette axiale et sur l'une des ailettes supplémentaires 21 afin d'éviter sa rotation. L'ailette axiale 22 de fixation peut être orientée vers le bas ou vers le haut de la culasse 2. Les orientations de l'ailette axiale 22 vers le haut et vers le bas de la culasse 2 sont respectivement illustrées aux figures 4 et 5.

Ces ailettes 21, 22 permettent une fixation aisée d'éléments mécaniques directement sur une même pièce et ainsi d'éviter la redondance de pièces de fixation dans le moteur.

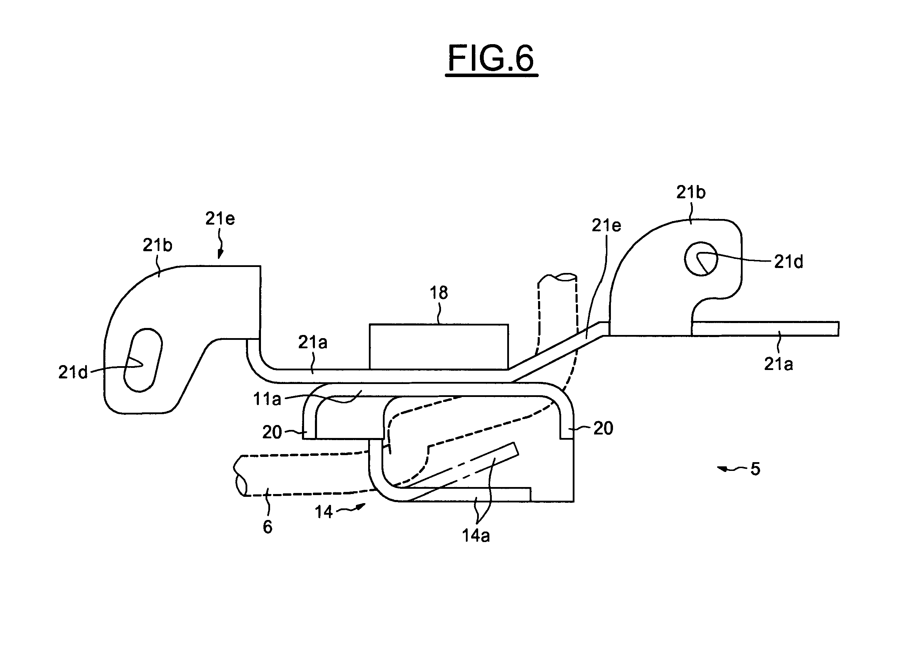

La figure 6 illustre une vue de dessus du dispositif de protection 5 illustré aux figures 4 et 5. La portion en traits mixtes représente la position de la goulotte de protection 14 en cas de choc frontal lorsque le boîtier papillon 4 vient en direction de la culasse 2.

Ainsi, grâce à la goulotte de protection 14 constituée d'une tôle métallique pliée, le tuyau 6 d'alimentation est cloisonné et ne sera pas endommagé par le boîtier papillon 4 grâce à la languette coudée 19 qui permettra d'amortir le boîtier papillon 4 en cas d'un choc frontal du véhicule. En effet, lors d'un choc frontal, le boîtier papillon vient en contact avec une des portions radiales 14a formant le U de la goulotte de protection 14 et la portion 19a de la languette coudée 19. La portion 14a se plie de manière à former un angle sensiblement inférieur à 90 degrés avec un des rebords latéraux 20. La languette coudée 19 permet de rigidifier le dispositif de protection 5 et d'éviter que la goulotte de protection 14 ne vienne endommager le tuyau 6 d'alimentation de carburant.

Grâce à l'invention qui vient d'être décrite, on obtient un dispositif de protection d'un tuyau d'alimentation de carburant ayant pour fonction d'une part de protéger un tuyau d'alimentation de carburant d'un moteur alimentant la rampe d'injection et d'autre part de permettre le levage d'un haut-moteur.

De plus, le dispositif de protection peut également intégrer une fonction d'accroche mutli-fonction d'éléments mécaniques ou d'éléments de fixation divers.

On notera que l'invention n'est pas limitée au moteur décrit ci-dessus et peut être intégré dans tout autre moteur de manière à protéger un tuyau d'alimentation de carburant.

## Revendications

1. Dispositif de protection (5) contre les chocs pour un tuyau d'alimentation (6) de carburant de moteur (1) à combustion interne comprenant un bloc moteur, une culasse (2) coiffant le bloc moteur, un organe annexe (4) monté à côté de la culasse (2) de manière à laisser subsister un écartement (D) entre la culasse (2) et l'organe annexe (4) et un tuyau (6) d'alimentation de carburant passant dans ledit écartement (D), **caractérisé en ce qu'**il comprend un étrier (10) présentant des moyens de fixation (13, 17) sur la culasse (2), une goulotte de protection. (14) présentant une forme de U disposée entre la culasse (2) et l'organe annexe (4), capable de recevoir le tuyau (6) d'alimentation de carburant et de le protéger en cas de choc tendant à diminuer l'écartement (D) entre la culasse (2) et l'organe annexe (4), et des moyens de préhension comprenant une portion de préhension s'étendant vers le haut de la culasse (2) présentant un perçage (12), de manière à coopérer avec un crochet de levage du moteur (1).

2. Dispositif de protection selon la revendication 1, dans lequel l'étrier (10) est réalisé en tôle métallique pliée ou emboutie.

3. Dispositif de protection selon la revendication 1 ou 2, dans lequel la goulotte de protection (14) comprend des moyens de renfort (15, 16) en saillie vers l'organe annexe (4).

4. Dispositif de protection selon la revendication 1, comprenant une portion formant languette coudée (19) en saillie vers l'organe annexe (4).

5. Dispositif de protection selon la revendication 4, dans lequel les moyens de fixation comprennent deux portions axiales de fixation (13, 17) situées respectivement dans des plans parallèles (P2, P3).

6. Dispositif de protection selon la revendication 4 ou 5, dans lequel la goulotte de protection (14) et la languette coudée (19) sont réalisées en tôle métallique pliée.

7. Dispositif de protection selon l'une quelconque des revendications 4 à 6, comprenant des ailettes de fixation (21, 22) d'éléments mécaniques.

8. Dispositif de protection selon l'une quelconque des revendications précédentes, dans lequel les moyens de fixation (13, 17) à la culasse (2) comprennent des perçages (13a, 17a) destinés à coopérer avec des vis de fixation transversales (9).

9. Moteur à combustion interne (1) comprenant un bloc moteur, une culasse (2) coiffant le bloc moteur, un organe annexe (4) fixé sur une extrémité latérale d'un collecteur d'admission (3) et monté à côté de la culasse (2) de manière à laisser subsister un écartement (D) entre la culasse (2) et l'organe annexe (4) et un tuyau (6) d'alimentation de carburant passant dans ledit écartement (D), **caractérisé en ce qu'**il comprend un dispositif de protection (5) pour le tuyau (6) d'alimentation de carburant selon l'une des revendications précédentes.

## Claims

1. Protective device (5) against impacts for a fuel supply line (6) of an internal combustion engine (1) comprising an engine block, a cylinder head (2) topping the engine block, an additional member (4) mounted beside the cylinder head (2) so as to allow a space (D) to subsist between the cylinder head (2) and the additional member (4) and a fuel supply line (6) entering the said space (D), **characterized in that** it comprises a mounting bracket (10) having fastening means (13, 17) on the cylinder head (2), a protective channel (14) having the shape of a U placed between the cylinder head (2) and the additional member (4), capable of accommodating the fuel supply line (6) and of protecting it in the event of impact tending to reduce the space (D) between the cylinder head (2) and the additional member (4), and gripping means comprising a gripping portion extending towards the top of the cylinder head (2) having a hole (12) so as to interact with a lifting hook for the engine (1).

2. Protective device according to Claim 1, in which the mounting bracket (10) is made of bent or stamped metal sheet.

3. Protective device according to Claim 1 or 2, in which the protective channel (14) comprises reinforcing means (15, 16) protruding towards the additional member (4).

4. Protective device according to Claim 1, comprising a portion forming a curved tongue (19) protruding towards the additional member (4).

5. Protective device according to Claim 4, in which the fastening means comprise two axial fastening portions (13, 17) situated respectively in parallel planes (P2, P3).

6. Protective device according to Claim 4 or 5, in which the protective channel (14) and the curved tongue (19) are made of bent metal sheet.

7. Protective device according to any one of Claims 4 to 6, comprising fastening fins (21, 22) for fastening mechanical elements.

8. Protective device according to any one of the preceding claims, in which the fastening means (13, 17) for fastening to the cylinder head (2) comprise holes (13a, 17a) designed to interact with transverse fastening screws (9).

9. Internal combustion engine (1) comprising an engine block, a cylinder head (2) topping the engine block, an additional member (4) attached to a lateral end of an inlet manifold (3) and mounted beside the cylinder head (2) so as to allow a space (D) to subsist between the cylinder head (2) and the additional member (4) and a fuel supply line (6) entering the said space (D), **characterized in that** it comprises a protective device (5) for the fuel supply line (6) according to one of the preceding claims.

## Patentansprüche

1. Stoßschutzvorrichtung (5) für eine Kraftstoffzuführleitung (6) eines Verbrennungsmotors (1), der einen Motorblock, einen den Motorblock bedeckenden Zylinderkopf (2), ein Zusatzelement (4), das so neben dem Zylinderkopf (2) angebracht ist, dass ein Zwischenraum (D) zwischen dem Zylinderkopf (2) und dem Zusatzelement (4) bestehen bleibt, und eine Kraftstoffzuführleitung (6), die durch diesen Zwischenraum (D) verläuft, umfasst, **dadurch gekennzeichnet, dass** sie einen Bügel (10), der Mittel (13, 17) zur Befestigung an dem Zylinderkopf (2) aufweist, einen U-förmigen Schutzkanal (14), der zwischen dem Zylinderblock (2) und dem Zusatzelement (4) angeordnet ist und die Kraftstoffzuführleitung (6) aufnehmen und vor Stößen schützen kann, bei denen tendenziell der Zwischenraum (D) zwischen dem Zylinderkopf (2) und dem Zusatzelement (4) verringert wird, und Greifmittel, die einen Greifabschnitt umfassen, der sich zum oberen Bereich des Zylinderkopfes (2) erstreckt und eine Bohrung (12) aufweist, um mit einem Haken zum Heben des Motors (1) zusammenzuwirken, umfasst.

2. Schutzvorrichtung nach Anspruch 1, wobei der Bügel (10) aus gebogenem oder tiefgezogenem Metallblech hergestellt ist.

3. Schutzvorrichtung nach Anspruch 1 oder 2, wobei der Schutzkanal (14) zum Zusatzelement (4) vorragende Verstärkungsmittel (15, 16) umfasst.

4. Schutzvorrichtung nach Anspruch 1, die einen eine zum Zusatzelement (4) vorragende abgewinkelte Zunge (19) bildenden Abschnitt umfasst.

5. Schutzvorrichtung nach Anspruch 4, wobei die Befestigungsmittel zwei axiale Befestigungsabschnitte (13, 17) umfassen, die jeweils in parallelen Ebenen (P2, P3) angeordnet sind.

6. Schutzvorrichtung nach Anspruch 4 oder 5, wobei der Schutzkanal (14) und die abgewinkelte Zunge (19) aus gebogenem Metallblech hergestellt sind.

7. Schutzvorrichtung nach einem der Ansprüche 4 bis 6, die Befestigungslaschen (21, 22) für mechanische Teile umfasst.

8. Schutzvorrichtung nach einem der vorhergehenden Ansprüche, wobei die Mittel zur Befestigung (13, 17) am Zylinderkopf (2) Bohrungen (13a, 17a) umfassen, die mit sich in Querrichtung erstreckenden Befestigungsschrauben (9) zusammenwirken sollen.

9. Verbrennungsmotor (1), der einen Motorblock, einen den Motorblock bedeckenden Zylinderkopf (2), ein Zusatzelement (4), das an einem seitlichen Ende eines Einlasskrümmers (3) befestigt und so neben dem Zylinderkopf (2) angebracht ist, dass ein Zwischenraum (D) zwischen dem Zylinderkopf (2) und dem Zusatzelement (4) bestehen bleibt, und eine Kraftstoffzuführleitung (6), die durch diesen Zwischenraum (D) verläuft, umfasst, **dadurch gekennzeichnet, dass** er eine Schutzvorrichtung (5) für die Kraftstoffzuführleitung (6) nach einem der vorhergehenden Ansprüche umfasst.
